# EUROPÄISCHE PATENTSCHRIFT

(11) **EP 0 986 512 B1**
(45) Veröffentlichungstag und Bekanntmachung des Hinweises auf die Patenterteilung: **27.02.2002**
(21) Anmeldenummer: 98930714.5
(22) Anmeldetag: 20.05.1998
(51) Int. Cl.: B66B 25/00, B66B 29/00, B66B 1/44, F16D 55/40

(54) **SICHERHEITSEINRICHTUNG FÜR PERSONENFÖRDERANLAGEN**
SAFETY DEVICE FOR SYSTEMS FOR CONVEYING PERSONS
DISPOSITIF DE SECURITE POUR SYSTEMES DE TRANSPORT DE PERSONNES

(30) Priorität: 05.06.1997 DE 19723897
(43) Veröffentlichungstag der Anmeldung: 22.03.2000
(73) Patentinhaber: Kone Corporation, 00330 Helsinki (FI)
(72) Erfinder: THIEL, Alfred, D-45549 Sprockhövel (DE)
(74) Vertreter: Spannagel, Hans-Achim
(86) Internationale Anmeldenummer: EP9802978
(87) Internationale Veröffentlichungsnummer: WO9855387

(56) Entgegenhaltungen:
- FR-A- 2 135 758
- FR-A- 2 445 467
- US-A- 4 664 247
- US-A- 5 513 728
- US-A- 5 642 804

## Beschreibung

Die Erfindung betrifft eine Sicherheitseinrichtung für eine Personenförderanlage, insbesondere eine Rolltreppe oder einen Rollsteig gemäß gattungsbildendem Teil des ersten Patentanspruches.

Allgemein bekannt ist, daß bei Personenförderanlagen, wie Rolltreppen und Rollsteigen mit externen Hauptantrieben, im Bereich der zugehörigen Abtriebselemente Sicherheitsbremsen in Form von Klinkenbremsen, Scheibenbremsen oder dgl. zum Einsatz gelangen. Infolge fehlender Untersetzung, hoher Schwungmasse und geringer Drehzahl der Abtriebselemente (ca. 10-20 min⁻¹) in Verbindung mit einem konstant eingestellten Bremsmoment, welches dem Niveau des zu erwartenden Lastmomentes entspricht, geschah es häufig, daß bei plötzlich sich einstellenden Problemen, wie Kettenbruch, Übergeschwindigkeit und Drehrichtungsumkehr, die Bremse schlagartig einfiel.

Die gängigen Sicherheitsvorschriften sehen vor, daß bei einer Fahrgeschwindigkeit von etwa 0,5 m/s ein Bremsweg von minimal 200 mm und maximal 1000 mm für Personenförderanlagen als ausreichend angesehen wird. im Hinblick auf das dem Lastmoment entsprechenden Bremsmoment treten nun bei geringerer Belastung, d.h. bei geringer Personenanzahl auf der Rolltreppe bzw. dem Rollsteig, Schwierigkeiten dahingehend auf, daß infolge des schlagartigen Einfallens der Bremse der Rollsteig bzw. die Rolltreppe nach einer Verzögerung von ca. 50-80 mm bereits zum Stehen kommt, wodurch darauf befindliche Personen hinfallen und sich unter Umständen schwer verletzen können. Auch Bauteile der Personenförderanlage werden durch dieses schlagartige Stillsetzen, insbesondere bei geringer Last, hoch belastet, wobei auch hier nicht unerhebliche Schäden auftreten können.

Die bisher zum Einsatz gelangten Bremsen bei externen Antrieben sind konstruktiv aufwendig, teuer und groß dimensioniert.

Die US-A 4,664,247 zeigt ein Bremssystem für Fördereinrichtungen, bei dem die gegenwärtige Fahrgeschwindigkeit mit einer Referenzgeschwindigkeit in einem Differenzverstärker vergleichen wird. Dieser Differenzverstärker gibt ein Geschwindigkeits-Steuersignal aus, das die Bremskraft der Bremse über den eine Bremsspule versorgenden Strom steuert. Die Referenzgeschwindigkeit ist vordefiniert und zeigt bei einem Abbremsvorgang einen sich mit der Zeit linear verändernden Vorgabewert, an den dann die tatsächliche Geschwindigkeit während des Abbremsens angepaßt wird. Das Resultat liegt in einem elektronisch geregelten rucklosen Abbremsen der Fördereinrichtung. Nachteil dieser Einrichtung ist die unkontrollierbare Bremswirkung bei Ausfall der Stromversorgung bzw. der elektronischen Steuerung, da die Bremse dann mit ihrer vollen Bremskraft unverzüglich eingreift.

Ziel des Erfindungsgegenstandes ist es, über außerhalb der Umlenkelemente vorgesehene Antriebe extern angetriebene Hauptantriebswellen mit einer Sicherheitseinrichtung zu versehen, die die Nachteile des St.d.T. nicht mehr aufweist, die einfach und kostengünstig herstellbar ist, und die eine optimale Sicherheit für Mensch und Maschinenteile gewährleistet.

Dieses Ziel wird durch die im Kennzeichen des ersten Patentanspruches angegebenen Merkmale erreicht.

Vorteilhafte Weiterbildungen des Erfindungsgegenstandes sind den Unteransprüchen zu entnehmen.

Getriebseitig kann ein gegenüber bisher zum Einsatz gelangenden Schwungmassen wesentlich leichter ausgeführtes Schwungmassenelement vorgesehen werden, wobei das Schwungmassenelement ausschließlich dazu vorgesehen ist, Reibungsfaktoren der Personenförderanlage, wie sie durch bewegte Bauteile derselben auftreten, zu kompensieren. Dadurch wird erreicht, daß bei auslaufender Rolltreppe bzw. auslaufendem Rollsteig der Auslaufweg größer ist, als der kleinste zulässige Bremsweg, wodurch sich ein gegenüber dem bisherigen St.d.T. sanfterer Auslauf einstellt. Der Drehzahlsensor steht elektrisch mit einer Hydrauliksteuerung in Wirkverbindung. Die Bremseinrichtung wird vorzugsweise durch eine mehrere Lamellen beinhaltende Lamellenbremse gebildet. Die vorzugsweise federbelastete Lamellenbremse ist in der Regel so eingestellt, daß das Lamellenpaket belastet ist, d.h. eine Bewegung der Hauptwelle nicht möglich ist. Für den normalen Betriebszustand werden die Lamellen über die hydraulische Steuereinrichtung gelüftet, d.h. die Federn vorgespannt. Bei Ausfall der Hydrauliksteuerung würde somit die Federkraft dahingehend wirksam, daß die Lamellen wieder vorgespannt werden.

Der Sensor mißt zwischen 8 und 15 mal pro Sekunde die Drehzahl des Schwungmassenelementes und gibt diesen Wert elektrisch an die Steuereinrichtung weiter, welche dann ggf. über Hydrospeicher diese Information hydraulisch an den die Lamellenbremse betätigenden Kolben weitergibt.

Der so geschaffene Regelkreis bleibt solange konstant, bis der Sensor eine von der vorgegebenen Drehzahl abweichende Drehzahl des Schwungmassenelementes feststellt. Diese kann z.B. bei Kettenbruch auftreten, da sich dann eine Geschwindigkeitserhöhung der Hauptantriebswelle infolge fehlender Last einstellt.

Über die Steuereinrichtung kann somit in Abhängigkeit der Drehzahlerhöhung die Vorspannung der Federkraft sanft kompensiert werden, so daß ein lastunabhängiges Abbremsen innerhalb der geforderten Sicherheitsbereiche herbeigeführt werden kann.

Infolge der lastunabhängigen Abbremsung der jeweiligen Hauptantriebswelle, können darauf befindliche Personen, unabhängig von ihrer Anzahl, ohne der Gefahr des Hinfallens ausgesetzt zu werden, sanft abgebremst werden. Dadurch werden auch die in derartigen Gefahrensituationen in Mitleidenschaft gezogenen Bauteile der Personenförderanlage weitestgehend geschont.

Bei größeren Stockwerkshöhen bzw. längeren Fahrwegen der Rollsteige können mehrere Getriebeeinheiten zum Einsatz gelangen, die dann jeweils auch mit Sicherheitskomponenten, bestehend aus Schwungmassenelement, Drehzahlsensor und Bremse, ausgerüstet sind, wobei die jeweiligen Sicherheitskomponenten dann durch eine einzige Steuerungseinrichtung betätigbar sind.

Das das Schwungmassenelement aufnehmende Getriebeende kann vorzugsweise durch einen statisch abgedichteten undrehbaren Deckel abgedichtet werden, wodurch Leckage nach außen sicher vermieden wird, da im Bereich der Dichtung keine drehenden Bauteile gegeben sind.

Der Erfindungsgegenstand ist anhand eines Ausführungsbeispieles in der Zeichnung dargestellt und wird wie folgt beschrieben. Es zeigen:
- Figur 1: - Teildarstellung eines Rolltreppenantriebes mit einer Sicherheitseinrichtung zur Abbremsung der Hauptwelle
- Figur 2: - Teildarstellung einer Antriebseinrichtung für eine Rolltreppe mit einer doppelseitigen Getriebeanordnung in Verbindung mit jeweils einer Sicherheitseinrichtung
- Figuren 3 und 4: - Teildarstellung des Getriebes gemäß Figur 1 in verschiedenen Ansichten in Verbindung mit der genannten Sicherheitseinrichtung.

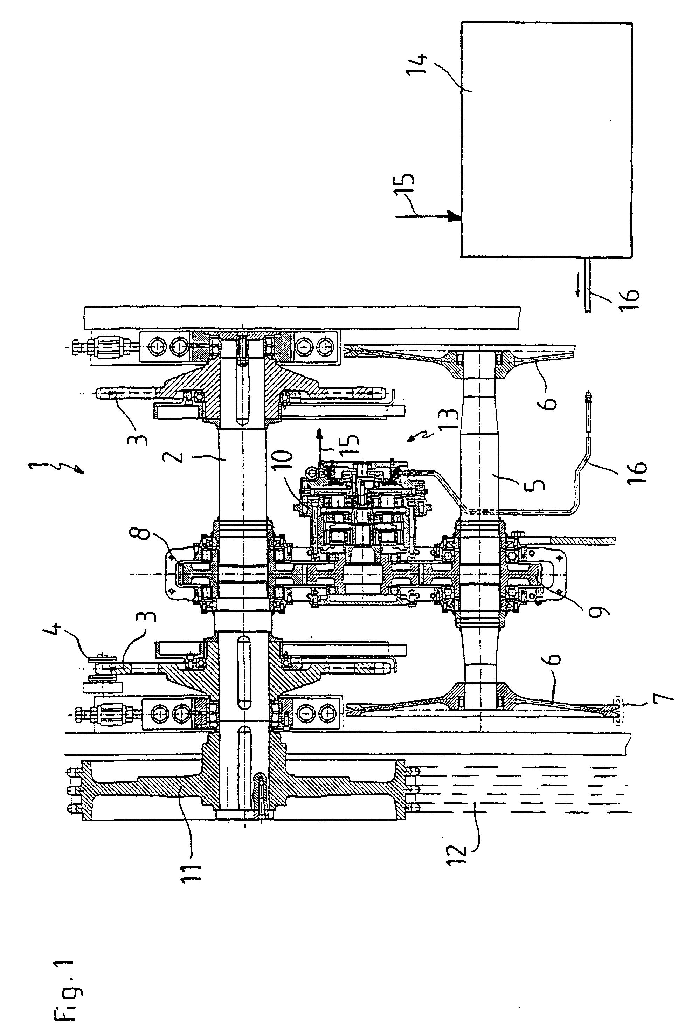

Figur 1 zeigt eine Teildarstellung eines Antriebssystems 1 für eine nicht weiter dargestellte Rolltreppe. Das Antriebssystem 1 beinhaltet eine Hauptantriebswelle 2, welche Umlenkelemente 3 für nur angedeutete Transportketten 4 für die nicht weiter dargestellten Stufen der Rolltreppe beinhalten. Das Antriebssystem 1 beinhaltet desweiteren eine zur Hauptantriebswelle 2 beabstandete Welle 5, welche Umlenkelemente 6 für ebenfalls nur angedeutete Handläufe 7 trägt. Sowohl auf der Hauptantriebswelle 2 als auch auf der Welle 5 sind Zahnräder 8,9 vorgesehen, die mit einem in diesem Beispiel als mehrstufiges Planetengetriebe ausgebildeten Getriebe 10 in Wirkverbindung stehen. Die Antriebsleistung eines hier nicht weiter dargestellten, außerhalb des Antriebssystems 1 liegenden Rolltreppenantriebes erfolgt über ein auf der Hauptantriebswelle 2 vorgesehenes Kettenrad 11 sowie ein Transportmittel 12 in Form einer Transportkette. Die im Bereich des Planetengetriebes 10 vorgesehene, hier nicht näher erkennbare Sicherheitseinrichtung 13 wirkt mit einer nur angedeuteten Steuereinrichtung 14 zusammen, die einerseits elektrisch über eine Leitung 15 mit der Sicherheitseinrichtung 13 und andererseits hydraulisch über eine Rohrleitung 16 mit derselben verbunden ist.

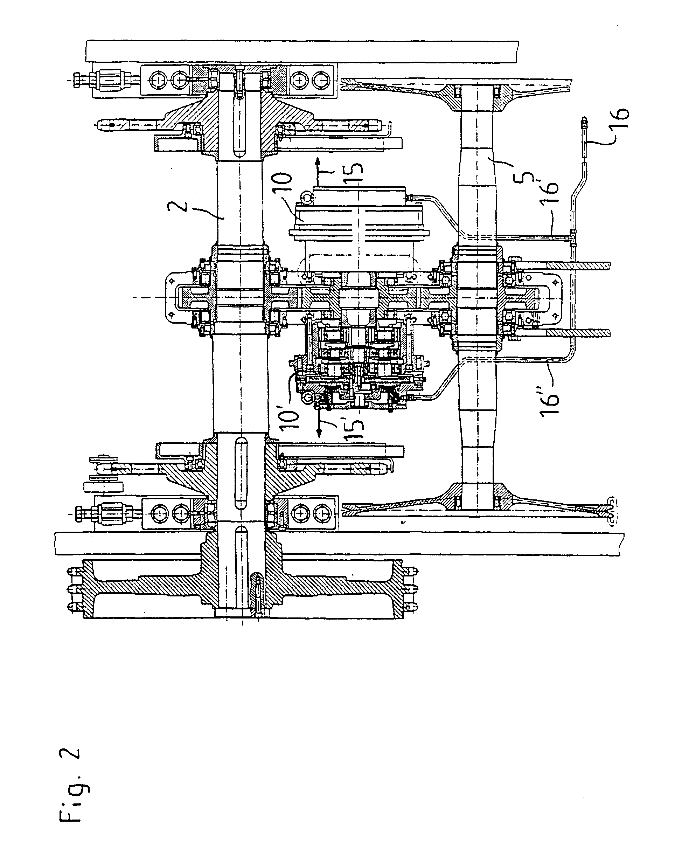

Figur 2 ist vom konstruktiven Aufbau her analog zu Figur 1 zu sehen, mit dem Unterschied, daß zwischen der Hauptantriebswelle 2 und der Welle 5 zwei, auch hier als Planetengetriebe ausgebildete Getriebe 10,10' vorgesehen sind, die über jeweils eine hydraulische Rohrleitung 16',16" verfügen, die in eine gemeinsame hydraulische Rohrleitung 16 übergehen und mit der hier nicht erkennbaren Steuereinrichtung verbunden sind. Analog dazu sind ebenfalls elektrische Leitungen 15,15' vorhanden, die ebenfalls mit der nicht weiter dargestellten Steuereinrichtung verbunden sind.

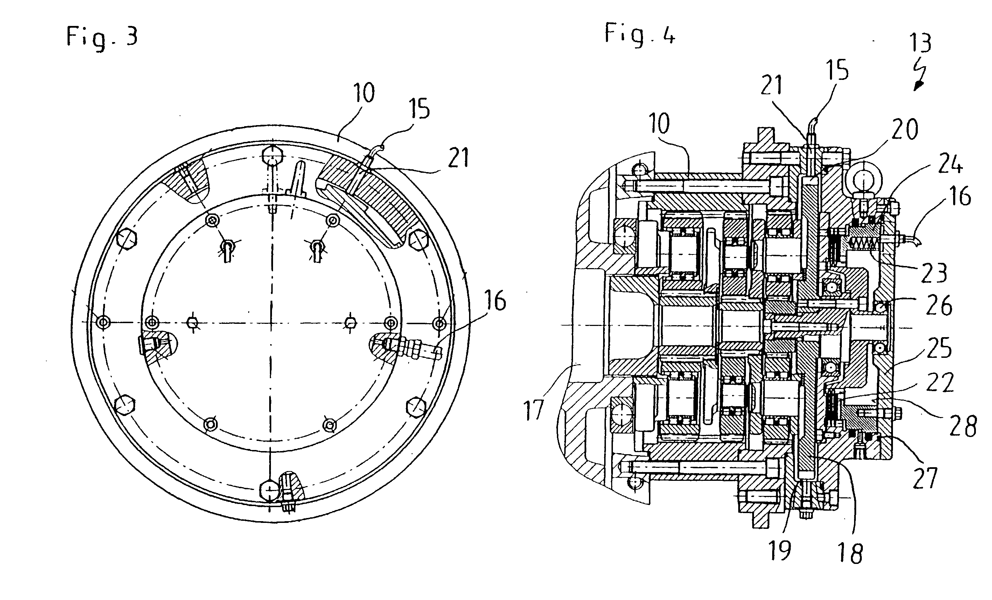

Die Figuren 3 und 4 zeigen in verschiedenen Ansichten das Planetengetriebe 10 in vergrößerter Darstellung. Die Sicherheitseinrichtung 13 beinhaltet nun ein mit der Getriebewelle 17 in Wirkverbindung stehendes Schwungmassenelement 18, das von seiner Dimensionierung her so ausgelegt ist, daß es im wesentlichen nur die im Bereich der Rolltreppe auftretenden Reibungsfaktoren (bewegliche Bauteile) kompensiert. Das scheibenförmig ausgebildete Schwungmassenelement 18 ist an seinem äußeren Umfang 19 mit Erhebungen 20 versehen. Im Bereich der äußeren Umfangsfläche des Schwungmassenelementes 18 ist getriebegehäuseseitig ein Drehzahlsensor 21 vorgesehen, der über die elektrische Leitung 15 mit der hier nicht dargestellten Steuereinrichtung (Figur 1, Bezugszeichen 14) in Wirkverbindung steht. Außerhalb des Schwungmassenelementes ist eine Lamellenbremse 22 vorgesehen, die über die Hydraulikleitung 16 ebenfalls mit der in Figur 1 dargestellten Steuereinrichtung 14 verbunden ist. Das über die Hydraulikleitung 16 zugeführte Hydraulikmedium beaufschlagt nun einen über eine Feder 23 belasteten Kolben 24. Im Außerbetriebszustand der Rolltreppe ist die Federkraft der Feder 23 so groß, daß sie die Lamellenbremse 22 in eingerücktem Zustand hält. Für den Betriebszustand wird über das Hydraulikmedium die Lamellenbremse 22 geöffnet, wobei dieser Zustand dann auch beibehalten wird. Sollte der Hydraulikkreislauf einmal zusammenbrechen, würde das Federelement 23 automatisch ein Schließen der Lamellenbremse 22 herbeiführen, sofern nicht weitere Sicherheitsmaßnahmen in Form von Kondensatoren, Batterien oder dgl. hier getroffen würden, um diesen unerwünschten schlagartigen Einfall der Bremse zu verhindern.

Die Funktion der Sicherheitseinrichtung 13 wird wie folgt erläutert:

Über den Drehzahlsensor 21 wird die Drehzahl des Schwungmassenelementes 18 mehrmals, vorzugsweise 8-15 mal pro Sekunde gemessen und über die elektrische Leitung 15 der Steuereinrichtung 14 zugeführt, die dieses Signal verarbeitet und mit einem vorgegebenen Sollwert vergleicht. Im Normalzustand wird dieses elektrische Signal hydraulisch dann so interpretiert, daß über das Hydraulikmedium die Lamellenbremse 22 offengehalten wird. Gefahrenmomente für die Rolltreppe sind unter anderem durch Brüche beweglicher Bauteile, wie Ketten oder dgl., begründet, wodurch sich dann die Geschwindigkeit an der Hauptantriebswelle 2 und somit auch die Drehzahl des Schwungmassenelementes 18 erhöhen würde. Diese Drehzahlerhöhung würde von dem Sensor 15 wahrgenommen und der Steuereinrichtung 14 übermittelt, die dann ein Abweichen vom Sollwert feststellt. Über das in der Leitung 16 geführte Hydraulikmedium wird dann ein Zustand erzeugt, der in einer vorgebbaren Zeit ein lastunabhängiges sanftes Einfallen der Lamellenbremse 22 hervorruft. Beispielsweise könnte über den Zeitfaktor 3 Sekunden bei einer vorgegebenen Frequenz von 300 Hz sowie einer Fahrgeschwindigkeit der Rolltreppe von 0,5 m/sec diese in diesem Zeitraum so sanft abgebremst werden, daß eine Gefahr für Mensch und Bauteile weitestgehend ausgeschlossen werden kann. Durch diese Maßnahme wird den gängigen Sicherheitsbestimmungen in jeder Weise Rechnung getragen und darüber hinaus der bekannte St.d.T. in einfacher Weise optimiert.

Das Planetengetriebe 10 wird nach außen durch einen Deckel 25 abgeschlossen, der über ein Rollenlager 26 mit der Getriebewelle 17 in Wirkverbindung steht. Da in diesem Bereich kein rotierendes Bauteil mehr gegeben ist, kann demzufolge auch im Bereich des Deckels 25 eine umlaufende statische Dichtung 27 vorgesehen werden, so daß in vorteilhafter Weise ein Ölaustritt aus dem Getriebeinnenraum 28 sicher vermieden wird.

## Patentansprüche

1. Sicherheitseinrichtung für eine Personenförderanlage, insbesondere eine Rolltreppe oder einen Rollsteig, mit einer die Umlenkelemente (3) für die Transportketten (4) für die Stufen bzw. Paletten aufnehmenden Hauptantriebswelle (2), einer weiteren die Umlenkelemente (6) für die Handläufe (7) beinhaltenden Welle (5) sowie mindestens einem Getriebe (8, 9, 10), das die Hauptantriebswelle (2) mit der Welle (5) verbindet, wobei die Antriebsleistung mindestens einer außerhalb der Umlenkelemente (3, 6) angeordneten Antriebseinheit über Transportmittel (12) auf die Hauptantriebswelle (2) übertragbar ist, und mit mindestens einer Bremseinrichtung (22), einer die Bremseinrichtung betätigende Steuereinrichtung (14), welche mit mindestens einem Bewegungs- oder Drehzahlsensor (21) verbunden ist, wobei die Hauptantriebswelle (2) basierend auf den vom Sensor (21) erhaltenen Signalen mittels der Bremseinrichtung (22) lastunabhängig abbremsbar ist,
**dadurch gekennzeichnet, daß** mindestens ein getriebeseitig angeordnetes Schwungmassenelement (18) vorgesehen ist.

2. Sicherheitseinrichtung nach Anspruch 1,
**dadurch gekennzeichnet, daß** das Schwungmassenelement (18) scheibenförmig und an der Getriebewelle (17) angeordnet ist.

3. Sicherheitseinrichtung nach Anspruch 1 oder 2, **dadurch gekennzeichnet, daß** das Schwungmassenelement (18) so dimensioniert ist, daß es im wesentlichen die aus Reibungsfaktoren beweglicher Bauteile gebildeten Verluste innerhalb der Personenförderanlage kompensiert.

4. Sicherheitseinrichtung nach einem der Ansprüche 1 bis 3,
**dadurch gekennzeichnet, daß** der Sensor (21) ein Drehzahlsensor ist und im Bereich des Schwungmassenelementes (18), vorteilhafterweise an dessen äußerem Umfang (19) angeordnet ist.

5. Sicherheitseinrichtung nach einem der Ansprüche 1 bis 4, **dadurch gekennzeichnet, daß** die Bremseinrichtung (22) eine federbelastete Lamellenbremse ist, wobei die Lamellen in der Außerbetriebstellung der Personenförderanlage durch die Federelemente (23) betätigt und im Betriebszustand der Personenförderanlage über die Steuereinrichtung (24) hydraulisch gelüftet sind.

6. Sicherheitseinrichtung nach einem der Ansprüche 1 bis 5, **gekennzeichnet durch** eine elektro-hydraulische Steuereinrichtung (14), welcher die seitens des Sensors (21) gemessenen Drehzahlwerte elektrisch zur Verfügung gestellt werden, und die die Lamellen der Bremseinrichtung (22) drehzahlabhängig über mindestens einen Kolben (24) mit Hydraulikmedium beaufschlagt.

7. Sicherheitseinrichtung nach einem der Ansprüche 1 bis 6, **dadurch gekennzeichnet, daß** die Messung der Drehzahl

8. Sicherheitseinrichtung nach einem der Ansprüche 1 bis 7,
**dadurch gekennzeichnet, daß** die Bremseinrichtung (22) neben dem Rotationsbereich des Schwungmassenelementes (18) vorgesehen ist, und daß die drehbaren Bauteile durch einen statisch abgedichteten nicht drehbaren Deckel (25) nach außen abgeschlossen sind. des Schwungmassenelementes (18) zwischen 8 und 15 mal je Sekunde erfolgt.

9. Sicherheitseinrichtung nach einem der Ansprüche 1 bis 8, **dadurch gekennzeichnet, daß** bei längeren Rollsteigen bzw. bei Rolltreppen zur Überwindung größerer Stockwerkshöhen mehrere Getriebeeinheiten (10,10') zwischen der Hauptantriebswelle (2) und der Welle (5) vorgesehen sind, die mit zugehörigen, aus Schwungmassenelement (18), Sensor (21) und Bremseinrichtung (22) gebildeten Sicherheitskomponenten in Wirkverbindung stehen, wobei die Betätigung der Bremseinrichtungen (22) über eine einzige Steuereinrichtung (14) erfolgt.

10. Sicherheitseinrichtung nach einem der vorhergehenden Ansprüche, **dadurch gekennzeichnet, daß** die Steuereinrichtung (14) hydraulisch mit der Bremseinrichtung (22) in Wirkverbindung steht.

11. Sicherheitseinrichtung nach einem der vorhergehenden Ansprüche, **dadurch gekennzeichnet, daß** die Bremseinrichtung (22) auf das Schwungmassenelement (18) oder auf ein anderes dem Getriebe nachgeschaltetes Teil wirkt.

## Claims

1. Safety device for a passenger transport installation, in particular an escalator or a moving walkway, comprising a main primary shaft (2) receiving the deflection elements (3) for the transport chains (4) of the stairs respectively pallets, another shaft (5) including the deflection elements (6) of the hand-rails (7), as well as at least one gear (8, 9, 10) connecting the main primary shaft (2) to shaft (5), the driving power of at least one driving unit, which is located outside the deflection elements (3, 6), being transferable to the main primary shaft (2) via transport means (12), and at least one braking device (22), and a control device (14) activating the braking device and being connected to at least one movement or speed sensor (21), wherein the main primary shaft (2) can be braked in a load-independent way by the braking device on the base of the signals received from sensor (21),
**characterised in that** at least one balance weight element (18) is provided on the side of the gear.

2. Safety device according to claim 1,
**characterised in that** the balance weight element (18) is disk-shaped and situated at the gear shaft (17).

3. Safety device according to claim 1 or 2, **characterised in that** the balance weight element (18) is dimensioned, such that it essentially compensates the losses produced by friction factors of mobile components within the passenger transport installation.

4. Safety device according to one of the claims 1 through 3, **characterised in that** the sensor (21) is a speed sensor and located at the balance weight element (18), advantageously at the outer circumference (19) thereof.

5. Safety device according to one of the claims 1 through 4, **characterised in that** the braking device (22) is a spring-loaded multiple disk brake, the disks being activated by the spring elements (23) in the out-of-operation state of the passenger transport installation and being hydraulically released via control device (24) in operation of the passenger transport installation.

6. Safety device according to one of the claims 1 through 5, **characterised by** an electro-hydraulic control device (14), which is electrically supplied with the speed values measured by sensor (21), and which impinges the disks of braking device (22) with hydraulic medium via at least one piston (24) as a function of the speed.

7. Safety device according to one of the claims 1 through 6, **characterised in that** the speed of the balance weight element (18) is measured between 8 and 15 times per second.

8. Safety device according to one of the claims 1 through 7, **characterised in that** the braking device (22) is provided beside the rotation area of the balance weight element (18), and that the rotatable components are closed to the outside by means of a statically sealed non-rotatable cover (25).

9. Safety device according to one of the claims 1 through 8, **characterised in that** for longer moving walkways respectively escalators for surmounting greater heights between floors, several gear units (10, 10') are provided between the main primary shaft (2) and shaft (5), which are in active relation with associated safety components formed by balance weight element (18), sensor (21) and braking device (22), the activation of the braking device (22) being carried out via a single control device (14).

10. Safety device according to one of the preceding claims, **characterised in that** the control device (14) is hydraulically in active relation with braking device (22).

11. Safety device according to one of the preceding claims, **characterised in that** the braking device (22) acts on the balance weight element (18) or another part topped by the gear.

## Revendications

1. Dispositif de sécurité pour une installation de transport de personnes, notamment un escalier roulant ou un trottoir roulant, comprenant un arbre principal (2) recevant les éléments déflecteurs (3) pour les chaînes de transport (4) des marches respectivement des palettes, un autre arbre (5) comprenant les éléments déflecteurs (6) pour les mains courantes (7) ainsi qu'au moins un engrenage (8, 9, 10), qui relie l'arbre principal (2) à l'arbre (5), la puissance motrice d'au moins une unité d'entraînement disposé à l'extérieur des éléments déflecteurs (3, 6) étant transférable à l'arbre principal (2) par des moyens de transport (12), et comprenant au moins un dispositif de freinage (22), un dispositif de commande (14) actionnant le dispositif de freinage, qui est relié à au moins un détecteur de mouvement ou de vitesse de rotation (21), l'arbre principal (2) étant susceptible d'être freiné de manière indépendante de la charge par le dispositif de freinage (22) sur la base des signaux reçus du détecteur (21)
**caractérisé en ce qu'**au moins un élément de masse d'inertie (18) disposé du côté de l'engrenage est prévu.

2. Dispositif de sécurité selon la revendication 1,
**caractérisé en ce que** l'élément de masse d'inertie (18) a la forme d'une disque et est disposé à l'arbre de transmission (17).

3. Dispositif de sécurité selon la revendication 1 ou 2, **caractérisé en ce que** l'élément de masse d'inertie (18) est dimensionné de sorte qu'il compense essentiellement les pertes formées par des facteurs de friction des composants mobiles à l'intérieur de l'installation de transport de personnes.

4. Dispositif de sécurité selon l'une des revendications 1 à 3, **caractérisé en ce que** le détecteur (21) est un détecteur de vitesse de rotation et est disposé dans la zone de l'élément de masse d'inertie (18), avantageusement à la périphérie extérieure (19) de celui-ci.

5. Dispositif de sécurité selon l'une des revendications 1 à 4, **caractérisé en ce que** le dispositif de freinage (22) est un frein à disques multiples chargé par ressort, les disques étant actionnées par les éléments de ressort (23) dans l'état hors service de l'installation de transport de personnes et étant desserrées hydrauliquement par le dispositif de commande (24) dans l'état de marche de l'installation de transport de personnes.

6. Dispositif de sécurité selon l'une des revendications 1 à 5, **caractérisé par** un dispositif de commande électro-hydraulique (14), qui est alimenté électriquement par des valeurs de vitesse de rotation mesurées par le détecteur (21), et qui injecte de l'agent hydraulique dans les disques du dispositif de freinage (22) en fonction de la vitesse de rotation à l'aide d'au moins un piston (24).

7. Dispositif de sécurité selon l'une des revendications 1 à 6, **caractérisé en ce qu'**on mesure la vitesse de rotation de l'élément de masse d'inertie (18) entre 8 et 15 fois par seconde.

8. Dispositif de sécurité selon l'une des revendications 1 à 7, **caractérisé en ce que** le dispositif de freinage (22) est prévu à côté de la zone de rotation de l'élément de masse d'inertie (18), et que les composants rotatifs sont fermés à l'extérieur par un couvercle (25) statiquement étanché et non rotatif.

9. Dispositif de sécurité selon l'une des revendications 1 à 8, **caractérisé en ce que** pour des trottoirs roulants respectivement des escaliers roulants plus longs pour surmonter de plus grandes hauteurs d'étage, on prévoit plusieurs unités d'engrenage (10, 10') entre l'arbre principal (2) et l'arbre (5), lesquels sont en relation active avec des composants de sécurité associés et composés de l'élément de masse d'inertie (18), du détecteur (21) et du dispositif de freinage (22), les dispositifs de freinage (22) étant actionnés par un seul dispositif de commande (14).

10. Dispositif de sécurité selon l'une des revendications précédentes, **caractérisé en ce que** le dispositif de commande (14) est hydrauliquement en relation active avec le dispositif de freinage (22).

11. Dispositif de sécurité selon l'une des revendications précédentes, **caractérisé en ce que** le dispositif de freinage (22) agit sur l'élément de masse d'inertie (18) ou sur une autre part placée en aval de l'engrenage.
